Europäisches Patentamt

European Patent Office

Office européen des brevets

(19)

(11) EP 0 852 568 B1

(12) EUROPEAN PATENT SPECIFICATION

(45) Date of publication and mention
of the grant of the patent:
**07.06.2000  Bulletin 2000/23**

(51) Int Cl.[7]: **C01G 23/07**

(86) International application number:
**PCT/US97/12207**

(21) Application number: **97934143.5**

(22) Date of filing: **24.07.1997**

(87) International publication number:
**WO 98/04500 (05.02.1998 Gazette 1998/05)**

(54) **METHOD AND APPARATUS FOR PRODUCING TITANIUM DIOXIDE**

VERFAHREN UND VORRICHTUNG ZUR HERSTELLUNG VON TITANDIOXID

PROCEDE ET DISPOSITIF POUR PRODUIRE DU DIOXYDE DE TITANE

(84) Designated Contracting States:
**BE DE ES FI FR GB IT NL**
Designated Extension States:
**SI**

(30) Priority: **25.07.1996 US 687280**
**03.07.1997 US 887649**

(43) Date of publication of application:
**15.07.1998  Bulletin 1998/29**

(73) Proprietor: **KERR-MCGEE CHEMICAL LLC**
**Oklahoma City, Oklahoma 73102 (US)**

(72) Inventors:
• **MAGYAR, John, C.**
**Ackerman, MS 39735 (US)**

• **MORRIS, Alan, J.**
**Oklahoma City, OK 73162 (US)**
• **WOOTTEN, Glenn, D.**
**Columbus, MS 39705 (US)**
• **YUILL, William, A.**
**Edmond, OK 73003 (US)**

(74) Representative: **Price, Nigel John King**
**J.A. KEMP & CO.**
**14 South Square**
**Gray's Inn**
**London WC1R 5LX (GB)**

(56) References cited:
**EP-A- 0 583 063     DE-A- 2 948 731**
**GB-A- 1 145 344     US-A- 4 803 056**

## Description

### FIELD OF THE INVENTION

The present invention relates to a process for producing titanium dioxide by reacting titanium tetrachloride vapors with oxygen and to an improved reactor for use in such a system. The process and reactor of the present invention provides the ability to control properties, such as particle size, of the titanium dioxide product.

### BACKGROUND OF THE INVENTION

It is well-known that titanium tetrachloride reacts with oxygen in the vapor phase to form titanium dioxide and that this reaction is initiated by heating the reactants to a suitable temperature. However hot titanium tetrachloride is highly corrosive and therefore many useful materials of construction for heat exchangers used to heat titanium tetrachloride are rapidly corroded. In practice this generally imposes an upper limit of about 400°C (752°F) on the temperature to which titanium tetrachloride can be heated by conventional heat exchangers.

A suitable temperature for the reactants (oxygen and titanium tetrachloride) is about 950°C (1742°F) and, in order to achieve this temperature in known processes, the oxygen feed must be heated sufficiently to compensate for the above-mentioned relatively low titanium tetrachloride temperature. Frequently, oxygen is heated directly or heated by an electrical discharge to temperatures of about 1427-1871°C (2600-3400°F) as oxygen is introduced into the oxidation reactor in combination with an auxiliary fuel. The use of these methods introduce unwanted impurities such as, for example, carbonaceous residues from the fuel or metallic impurities from the electrodes used for the electrical discharge.

Titanium dioxide ($TiO_2$), which is useful as a pigment, is produced on a commercial scale by reacting titanium tetrachloride vapor ($TiCl_4$) with oxygen ($O_2$). In one commercial process, a preheated oxidizing gas is passed into a reaction zone and preheated titanium tetrachloride vapor is passed into the same reaction zone where the titanium tetrachloride vapor is reacted with the oxygen contained in the oxidizing gas according to the following reaction:

$$TiCl_4 + O_2 \rightarrow TiO_2 + 2Cl_2$$

In such a prior art process the combined temperature of the reactants (titanium tetrachloride and oxygen), before reaction, had to be at least about 871°C (1600°F) in order to sustain the oxidation reaction and, preferably, the combined temperature of the reactants was between about 899°C (1650°F) and about 982°C (1800°F). In one process, the oxidizing gas was preheated for introduction into the reaction zone to a temperature of about 982°C (1800°F) and titanium tetrachloride vapor was preheated for introduction into the reaction zone to a temperature of about 954°C (1750°F).

Titanium tetrachloride vapors at relatively high temperatures of about 954°C (1750°F) are highly corrosive. Operation at such a high temperature requires frequent maintainence and repair of the titanium tetrachloride preheating equipment. It is therefore desirable to develop a system for producing titanium dioxide by reacting titanium tetrachloride vapor with oxygen utilizing titanium tetrachloride vapors preheated to minimum temperature levels, such as below about 204°C (400°F) since this would minimize the cost of repair and maintainence of the titanium tetrachloride preheating equipment.

A reactor of the type utilized in the process for producing titanium dioxide by reacting titanium tetrachloride vapor with oxygen as described above was disclosed in U.S. Pat. No. 3,512,219, issued to Stem, and the configuration with a dual slot oxidizer (DSO) in U.S. Pat. No. 4,803,056 issued to Morris, et al., both specifically incorporated herein by reference.

In this prior process, pure oxygen was heated in a metal alloy tube furnace. In one embodiment, oxygen could only be heated to a maximum temperature of about 982°C (1800°F) due primarily to the thermal efficiency and the materials of construction of the oxygen preheating apparatus. Thus, in this process, titanium tetrachloride vapors also had to be heated to a temperature of about 982°C (1800°F) in the titanium tetrachloride vapor preheating apparatus. In the alternative, additional oxygen preheating equipment might be added to the existing oxygen preheating equipment in an effort to elevate the oxygen temperature to a level above 982°C (1800°F), thereby permitting the utilization of titanium tetrachloride vapors which have been preheated to lower temperature levels, below 982°C (1800°F). However, the additional oxygen preheating equipment represents a substantial expense which might not be offset by any savings in the titanium tetrachloride vapor preheating apparatus resulting from the lower temperature requirements for the titanium tetrachloride vapors.

In the above process, the titanium tetrachloride vapor preheating equipment utilized silica pipe for the containment of the highly corrosive titanium tetrachloride vapors. The size of the silica pipe was limited to a maximum of about six inches because of manufacturing techniques suitable for producing a relatively flawless silica pipe. Also, the strength and integrity of welded silica pipe joints decrease with increasing diameters and breakage is more probable with higher diameter silica pipes. A primary problem with silica is the failure rate. The failure rate is proportional to the surface area of the silica pipe. As the area of the silica pipe increases, the failure rate increases. Further, the maximum permissible pressures within the silica pipe decreases with increasing diameters and above six inch diameter silica pipes might result in working pressures insufficient to efficiently drive the titanium tetrachloride vapors downstream from the titanium tetrachloride vapor preheating equipment.

Auxiliary fuel normally is added at the upstream end of the reactor near the oxidizing gas introduction assembly. Injection of auxiliary fuels, such as carbon monoxide and methane directly into the reactor to stabilize the flame in the reactor has been suggested as a means for lowering the temperature level requirements for the titanium tetrachloride vapors, thereby increasing the capacity of existing titanium tetrachloride vapor preheating equipment, i.e., the silica pipe preheaters. This approach can lead to a reduction in temperature for preheating the $TiCl_4$ from about $954°C$ ($1750°F$) to about $399°C$ ($750°F$) when using supported combustion from an auxiliary fuel. However, using supported combustion generates combustion products which dilute the chlorine recycle gas and result in larger capacity downstream equipment being required to process the increased gas load.

## SUMMARY OF THE INVENTION

According to a first aspect of the present invention there is provided a process for the production of titanium dioxide, this process being as claimed in claim 1.

According to a second aspect of the present invention there is provided a reactor for use in producing titanium dioxide by reacting titanium tetrachloride vapours with oxygen, the reactor being as claimed in claim 13.

According to a third aspect of the present invention there is provided a process for the production of titanium dioxide in an oxidation reactor having a first reaction zone and a second reaction zone spaced a distance from the first reaction zone, the process being as set out in claim 19.

Preferred embodiments according to the invention are set out in dependent claims 2-12, 14-18 and 20-32.

## BRIEF DESCRIPTION OF THE DRAWINGS

Figure 1 is a diagrammatic view of the equipment for preheating oxygen for introduction into the reaction zones in the reactor.

Figure 2 is a graph showing the relationship of CBU and tint tone vs. $TiCl_4$ to $O_2$ ratio at the primary $TiCl_4$ slot.

Figure 3 is a graph showing tint tone vs. consistency.

Figure 4 is a diagrammatic view of one embodiment of the system of the present invention showing the relative positions of the second $TiCl_4$ introduction assembly and the second $O_2$ introduction assembly on the reactor.

Figure 5 is a diagrammatic view, similar to Figure 4, showing another embodiment of the present invention.

Figure 6 is a diagrammatic view, similar to Figure 4, showing another embodiment of the present invention.

Figure 7 is a diagrammatic view, similar to Figure 4, showing another embodiment of the present invention.

Figure 8 is a diagrammatic view, similar to Figure 4, showing another embodiment of the present invention.

## DESCRIPTION OF THE PREFERRED EMBODIMENTS

The present invention determined that properties, such as particle size and other related properties, of the raw pigment produced in oxidation can be controlled over a wide range by controlling the titanium tetrachloride to oxygen ratio in the zone of the reactor where particles initially start to form or are nucleated. According to the present invention, the properties of raw pigment can be controlled by changing the ratio of $TiCl_4$ to $O_2$ in the region of the reactor where the $TiO_2$ particles start to form or are nucleated. Controlling the ratio of $TiCl_4$ to $O_2$ by this method requires a second $O_2$ addition downstream in the reactor to meet stoichiometric requirements for the over all reaction. Similar control of particle properties can be achieved by varying the mixing rate or injection angles, but these controls cannot be as conveniently adjusted as the flow rates of the $TiCl_4$ and $O_2$ reactants.

Tests performed using a hot secondary oxygen flow that was split using orifice plates produced pigments with much more positive tint tones, but since the relative oxygen flows were controlled by orifice plates it was difficult to control each $O_2$ flow so as to control particle size. One test performed regulated the oxygen flows while the oxygen was still cold and then heated each stream to the desired temperature. This test allowed for independent control of the volume and temperature of each gas stream. The use of secondary oxygen can be used to increase tint tone, scatter, and reduce aggregation. Reducing aggregation results in decreasing consistency, oil adsorption, dispersant demand for the finished pigments. A pigment with a more positive tint tone can be produced by using secondary oxygen. Diverting some of the oxygen going to the front of the oxidizer to a position behind the first $TiCl_4$ slot have made finished pigments with acrylic tint tones as positive as about -3.2. It is expected that tint tones more positive than -3.2 are obtainable using a secondary oxygen slot.

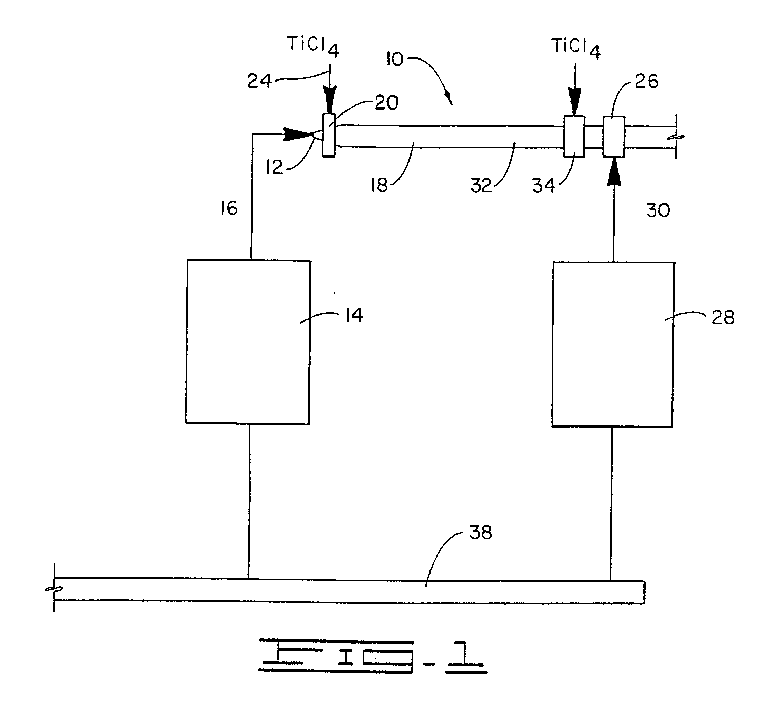

Shown in Figure 1 is a schematic for the primary and secondary $O_2$ flows constructed in accordance with the present invention for use in a process for producing titanium dioxide by vapor-phase oxidation of titanium tetrachloride. In general, the reactor **10** comprises: a first oxidizing gas introduction assembly **12** which is adapted to receive oxygen from oxygen preheat equipment **14** by way of a flowline **16** and pass the oxygen at a first predetermined temperature into the first reaction zone **18** formed in the reactor **10**; a first titanium tetrachloride vapor introduction assembly **20** which is adapted to receive titanium tetrachloride vapor at a first predetermined temperature from titanium tetrachloride preheat equipment by way of a flowline **24** and to pass the titanium tetrachloride vapor at the first predetermined temperature into the first reaction zone **18**; and a second oxidizing gas introduction assembly **26** which is adapted to receive oxygen at a second predetermined temperature, which can be above, below, or the same temperature as the first oxygen temperature, from second oxidizing gas preheat equipment **28** by way of a flowline **30** and to pass oxygen at the second predetermined temperature into the second reaction zone **32**, the mixture from the first reaction zone being passed into the second reaction zone for reacting with oxygen at the second temperature which simultaneously is being passed into the second reaction zone.

A second addition of titanium tetrachloride may be introduced into the reactor through a second titanium tetrachloride introduction assembly **34**. The second titanium tetrachloride introduction assembly **34** is spaced a distance from the first titanium tetrachloride introduction assembly **20**. The second titanium tetrachloride introduction assembly **34** receives titanium tetrachloride vapors at an elevated temperature and passes the titanium tetrachloride vapors into the reactor near the second reaction zone **32**. The second oxidizing gas introduction assembly **26** can be located between the first and second titanium tetrachloride introduction assemblies **20** and **34**. Alternatively, the second oxidizing gas introduction assembly **26** can be located after the second titanium tetrachloride introduction assembly **34** such that the second titanium tetrachloride introduction assembly is between the first titanium tetrachloride introduction assembly and the second oxidizing gas introduction assembly.

The reactor is a continuous tube but can be divided into two zones for purposes of discussion. As used herein "first reaction zone" refers to the region of the reactor near the first oxygen inlet point where the reaction between $TiCl_4$ and $O_2$ is initiated and where the $TiO_2$ particles are nucleated. As used herein, "second reaction zone" refers to the region of the reactor extending downstream from the first reaction zone where interparticle reactions occur and the particles grow by the aerosol process to the desired size. The second titanium tetrachloride introduction assembly is positioned on the reactor such that it is located within the second reaction zone. It is believed that the reaction between titanium tetrachloride and oxygen occurs throughout the reactor and is not isolated in any one particular zone.

In a preferred embodiment, oxygen is fed to the reactor **10** from the $O_2$ header **38** shown at the bottom of Figure 1. Oxygen preheaters **14** and **28** receive oxygen from the header and are capable of preheating oxygen to about 954°C (1750°F). The preheaters **14** and **28** heat the oxygen to the respective predetermined temperatures. Oxygen preheater **14** heats from about 50% to about 95% of the total $O_2$ to be fed into the reactor and preheater **28** heats the balance of the total $O_2$, from about 5% to about 50%, to be fed into the reactor **10**. The primary oxygen leaves preheater **14** through an insulated pipe **16** that coaxially joins the larger tube that serves as the reactor at the oxidation gas introduction assembly **12**. An inlet for auxiliary fuel and scour media is located near the oxidation introduction assembly **12** and serves to introduce the fuel to the hot oxygen and to direct scour media for cleaning the reactor walls in the reactor. The inlet is located far enough upstream in the reactor to allow for nearly complete combustion of the auxiliary fuel and to provide the proper trajectory for the scour media entering the reactor. The secondary oxygen leaves preheater **28** through an insulated pipe **30** and enters the reactor at the second oxidizing gas introduction assembly **26**.

The first increment of $TiCl_4$ which has been preheated to about 399°C (750°F), primary $TiCl_4$, is introduced into the reactor through the first titanium tetrachloride introduction assembly **20**. The hot primary $O_2$ and $TiCl_4$ are swept into the first reaction zone **18** of the reactor. It will be appreciated that properties of the pigment including tint tone can be accurately controlled by varying the relative amounts of primary $TiCl_4$ and primary $O_2$ fed through oxidizing into the first reaction zone **18**. The amount of $TiCl_4$ fed through the titanium tetrachloride introduction assembly **20** has, in practice, varied from about two thirds to all of the $TiCl_4$ fed to the reactor. The hot gases consisting of unreacted $O_2$ and $TiCl_4$ and very fine $TiO_2$ particles pass from the first section of the reactor **18** to the second section of the reactor **25**. The remainder of the $TiCl_4$ is fed through the second titanium tetrachloride introduction assembly **34** into the second reaction zone **32** where the $TiO_2$ particles are grown to full size.

The amount of $TiCl_4$ that can be fed through the second titanium tetrachloride introduction assembly **34**, secondary $TiCl_4$, is determined by the overall response of the reactor. If too much $TiCl_4$ is fed through the second titanium tetrachloride introduction assembly **34**, unreacted $TiCl_4$ will leave the second reaction zone **32** and appear in the final product. If too little $TiCl_4$ is added through the second titanium tetrachloride introduction assembly **34**, the consumption of auxiliary fuel increases. The optimum amount covers a fairly wide range of flows and is determined by other operating parameters for the reactor. The amount of secondary $O_2$ added at the second oxidizing gas introduction assembly **26** is determined by how much unreacted $TiCl_4$ is present in the mixture downstream of the second titanium tetrachloride introduction assembly **34**. Typical operating practice is to add enough total $O_2$ so that the export gases contain from about 7 to 10 percent $O_2$.

Preferably, oxygen preheat equipment **14** is constructed to heat the primary oxygen to a temperature of about 954°C (1750°F), advantageously from about 815°C (1500°F) to about 982°C (1800°F). The second oxygen preheat equipment **28** advantageously heats the secondary oxygen from about 25°C (77°F) to temperatures as high as about 1038°C (1900°F). Such oxygen preheat equipment is commercially available and is well known in the art.

In a preferred embodiment, titanium tetrachloride preheat equipment heats titanium tetrachloride to a temperature of about 177°C (350°F) to produce titanium tetrachloride vapors. Such titanium tetrachloride preheat equipment is commercially available and is well known in the art. In one embodiment, for example, the titanium tetrachloride is heated and vaporized in a shell-and-tube type heat exchanger operating at a temperature of about 177°C (350°F). One type of heater is a shell-and-tube heat exchanger with a u-shaped tube bundle of nickel and glass-lined carbon steel sheet. The tube-side heating medium normally is steam, but may, at temperatures approaching 204°C (400°F), be some other heat transfer fluid such as Dow-therm, should suitable steam pressure be unavailable. One silica pipe heater which is useful for receiving titanium tetrachloride at about 204°C (400°F) is a tubular radiant-heat furnace with vertical silica pipe. The titanium tetrachloride vapors introduced into the reactor through the first titanium tetrachloride introduction assembly **20** are further heated to a temperature of less than about 427°C (800°F), preferably less than about 399°C (750°F), before injection into the reactor. The titanium tetrachloride vapors introduced through the second titanium tetrachloride introduction assembly **34** are preferrably introduced at a temperature of about 177°C (350°F). Preferably, one titanium tetrachloride preheater is used to preheat the $TiCl_4$ to produce the $TiCl_4$ vapors. The preheated $TiCl_4$ vapors would then be split into two lines, one directed to the second titanium tetrachloride introduction assembly and the other to additional heating equipment for further heating before being passed to the first titanium tetrachloride introduction assembly.

In a preferred embodiment, assuming a capacity of 100 tons per twenty-four hour period of titanium dioxide produced utilizing reactor **10**, the flow of primary oxygen gas into the oxidizing gas introduction assembly and through the reactor **10** is about 60 pound mole per hour, the flow level of primary titanium tetrachloride into the titanium tetrachloride introduction assembly **20** and through the reactor **10** is about 104 pound mole per hour and the flow of secondary oxygen at the second temperature into the second oxidizing gas introduction assembly and through reactor **10** is about 60 pound mole per hour. In this embodiment, about one pound mole per hour of oxygen together with two hundred pounds per hour of sand are passed through the injection tube. It will be appreciated that secondary oxygen could be used with the reactor of the present invention without the use of scour sand in the reaction zone

In operation, oxygen is preheated in oxygen preheat equipment **14** to the predetermined temperature and then passed at a controlled, predetermined rate through flowline **16** to the oxidizing gas introduction assembly **12** and passes into the first reaction zone **18**.

Titanium tetrachloride is preheated in titanium tetrachloride preheat equipment to a predetermined temperature and passed through flowline **24** at a controlled rate into titanium tetrachloride introduction assembly **20** and into the first reaction zone **18**, where oxygen at the first temperature and titanium tetrachloride react to produce a mixture including particles of titanium dioxide, this mixture being passed downstream into the second reaction zone **32**. Oxygen is preheated in second oxidizing gas preheat equipment **28** to predetermined second temperature and passed at a controlled rate through flowline **30** to the second oxidizing gas introduction assembly **26** and into the second reaction zone **32**, where oxygen at the second temperature reacts with the titanium tetrachloride in the mixture passed from the first reaction zone **18** to produce a mixture including additional titanium dioxide, the mixture from the second reaction zone **32** being passed downstream for further processing in a manner known in the art of producing titanium dioxide by vapor phase oxidation of titanium tetrachloride.

In order to ensure rutile is the dominant phase in the titanium dioxide product, the temperature in the reaction zones must be above a minimum temperature level of about 1204°C (2200°F). Reagents, such as aluminum chloride and water vapor, may added to the reactor for controlling or modifiying titanium dioxide pigment properties. Because alumina and water act as rutilization agents, the minimum temperature level depends on the amount of alumina and water present in the system. As the water and alumina content increases, the rate of rutilization increases.

The combined temperature of the reactants, prior to reaction, to produce the required reactions, must be at least 871°C (1600°F) to sustain the oxidation reaction and preferably, the combined temperature of the reactants, before reaction, should be in the range of from about 899°C (1650°F) to about 982°C (1800°F). In one operational process for producing titanium dioxide by vapor-phase oxidation of titanium tetrachloride, oxygen is preheated to a temperature level of about 982°C (1800°F) and titanium tetrachloride is preheated to a temperature level of above about 954°C (1750°F). In this process, oxygen and titanium tetrachloride vapors are reacted in a reaction zone utilizing a reactor like that disclosed in Stern, et al., U.S. Pat. No. 3,512,219, to produce a mixture including some titanium dioxide, and the mixture consisting of unreacted $TiCl_4$ and $O_2$ and reaction products is passed downstream for further processing.

The reaction of titanium tetrachloride vapors with oxygen to form titanium dioxide is exothermic. In a completely adiabatic system, starting with 177°C (350°F) $TiCl_4$ vapor and 25°C (77°F) oxygen, a reaction temperature of about 1316°C (2400°F) is attainable, which is above the minimum temperature of 1204°C (2200°F) required to insure rutile as the dominant phase in the titanium dioxide product of reaction. The system of the present invention utilizes this heat of reaction to reduce the preheat requirement for a portion of the titanium tetrachloride vapors utilized.

Utilizing only the first reaction zone and assuming a flow of oxygen from oxygen preheat assembly of 60 pound moles per hour at a temperature level of about 982°C (1800°F) and assuming a flow of titanium tetrachloride from the titanium tetrachloride preheat assembly of 52 pound moles per hour at a temperature of about 982°C (1800°F), about 4150 pounds per hour of titanium dioxide are produced and the heat of reaction in the first reaction zone, assuming a completely adiabatic system will generate a temperature of above 1316°C (2400°F).

In one embodiment, the walls of reactor **10** are cooled (fluid cooling) to protect the walls and to keep the titanium dioxide product from sintering on the walls of the reactor such that a scouring media may be used to remove the titanium dioxide. The walls of the reactor maybe cooled by providing a purge of nitrogen or chlorine gas through the reactor walls.

The possibility of controlling raw pigment properties using $TiCl_4$ concentration was tested using the oxidizer configuration shown in Figure 1. The properties of the pigment produced from a raw pigment can be estimated by measuring the Carbon Black Undertone (CBU) of the raw pigment. To measure CBU, a sample of the raw pigment and a standard sample are each mixed in a paste with carbon black. Reflectance measurements are made with a Hunterlab color difference meter, such as Model D25-9. Undertone is calculated from these measurements. The CBU value gives a measure of mean particle size of the pigment since the reflected light will change from blue, through the spectrum, to red as the particle size increases.

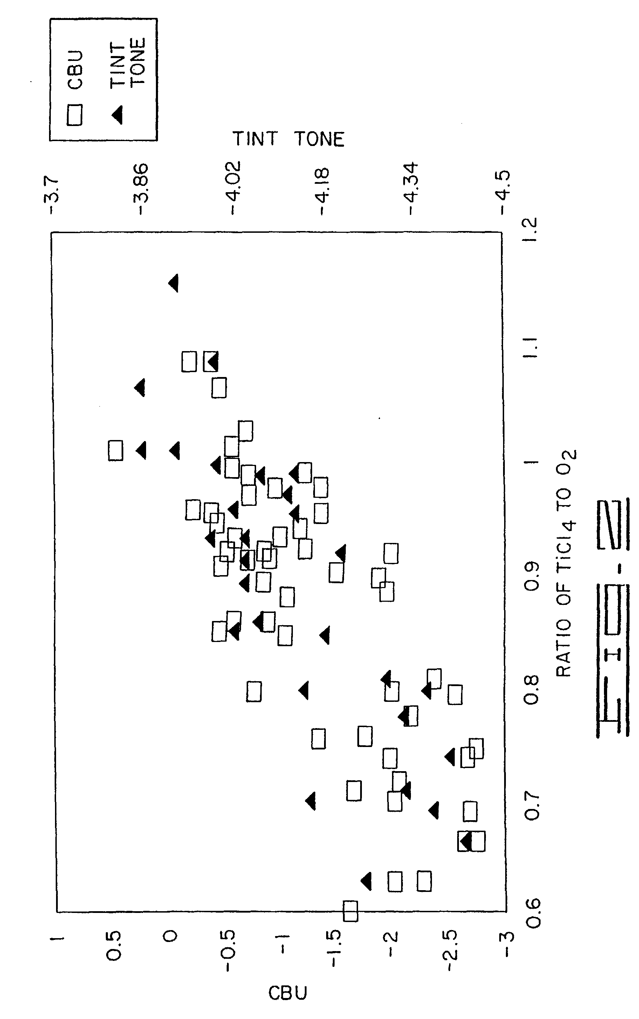

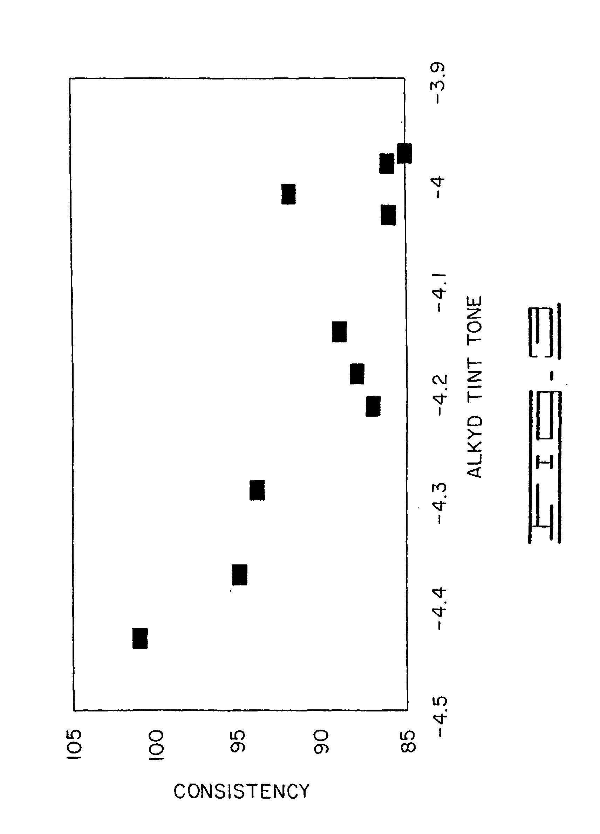

An oxidizer was designed so that the ratio of $TiCl_4$ to $O_2$ could be controlled by changing the rate of flow of oxygen in the front of the oxidizer. Figure 2 is a plot showing how raw pigment CBU and finished pigment alkyd tint tone could be controlled by controlling the ratio of $TiCl_4$ to $O_2$ added at the front of the oxidizer. It is necessary to always provide enough $O_2$ to react completely with the $TiCl_4$ vapor in the reactor, so, a second addition of $O_2$ may be necessary. Consistent with the patent of Morris, the oxidizer may also have one or more $TiCl_4$ injection slots. The significant discovery was that an important variable in controlling pigment size was the ratio of $TiCl_4$ to $O_2$ in the region where nucleation is occurring. The data shown in Figure 2 was collected with three different configurations of the oxidizer. The different positions for addition of the oxygen required to oxidize all of the $TiCl_4$ are shown in Figure 3. The CBU of the raw pigment, a measurement of particle size, within the uncertainty of measuring reactant volumes and CBU appears to be largely dependent on the ratio of $TiCl_4$ in the region of the oxidizer where nucleation occurs. The properties of the finished pigments are also affected by varying the ratio of $TiCl_4$ to $O_2$. The alkyd tint tone of the finished pigment is shown on the right-hand side of Figure 2 and the consistency is shown as a function of tint tone in Figure 3. The consistencies in Figure 3 were measured after the pigments had been treated with a standard grinding and finishing procedure.

Further inlet points may be positioned such that oxygen may be added to the reaction stream at a point where any previously added titanium tetrachloride has not been substantially completely oxidized. This enables the oxygen which is added at the further inlet points to be at a lower temperature than that added at the first inlet point since the temperature necessary to initiate reaction is provided by the heat of reaction of the previously added titanium tetrachloride. The temperature of the secondary oxygen determines the amount of oxygen that can be used before observing a titanium tetrachloride slip, that is, where unreacted titanium tetrachloride begins to appear in the titanium dioxide product. By varying the temperature of the secondary oxygen, a wide range of $O_2$ may be added to the reactor thus allowing for control of the particle size of the titanium dioxide product.

Oxygen is introduced into the reactor as an oxidizing gas stream which may comprise a gas containing a relatively low proportion of oxygen such as air but may also be substantially pure oxygen or another gas mixture such as oxygen-enriched air.

The primary oxidizing gas stream is usually preheated before introduction into the reactor to a temperature between about 815°C (1500°F) and about 982°C (1800°F), preferably between about 899°C (1650°F) and about 954°C (1750°F). Any suitable means can be used to achieve this temperature but the gas stream is conveniently heated by passing it through a hollow metal coil which is externally heated by a gas flame.

Titanium tetrachloride is introduced into the reactor at a temperature of at least about 149°C (300°F), preferably between about 149°C (300°F) and about 427°C (800°F). This temperature may be achieved, at least in part, by utilizing the heat of reaction of aluminum and chlorine which form aluminum chloride with which the titanium tetrachloride is admixed. Advantageously, titanium tetrachloride is first vaporized in preheating equipment to produce titanium tetrachloride vapors. Next, the vapors are preheated to about 350°C (662°F) to 400°C (752°F) by passing through a hollow coil formed from a metal such as Inconel which is externally heated by a gas flame, and subsequently passed to an aluminum chloride generator where the vapors are mixed with aluminum chloride and further heated to the chosen reaction temperature_usually less than about 427°C (800°F), An $AlCl_3$ generator may be provided for one or more of the $TiCl_4$ inlet points or one common $AlCl_3$ generator may be used for some or all of the $TiCl_4$ inlet points.

A number of types of aluminum chloride generators are well known in the art and can be used in the process of the invention. For example, powdered aluminum with or without an inert particulate material can be fluidized in a reactor by the upward passage of reactant chlorine and/or an inert gas. Alternatively, aluminum can be introduced into a stream of chlorine gas in particulate form but not necessarily sufficiently finely divided to fluidize in the gas stream. A fixed bed of particulate aluminum can also be chlorinated by passing chlorine into the bed through numerous nozzles surrounding the bed. Other methods include passing chlorine over molten aluminum or feeding two lengths of aluminum wire into a reactor in which they serve as consumable electrodes, a discharge being maintained between these electrodes in the presence of chlorine.

Titanium tetrachloride is mixed with aluminum chloride in such a way that the heat of reaction is used as a means of raising the temperature of the titanium tetrachloride. It may, for example, be passed into the aluminum chloride generator either separately or mixed with chlorine and may form part of the fluidizing gas in a fluid bed reactor. Alternatively it may be mixed with the hot aluminum chloride close to the exit from the generator. It is advantageous to heat the titanium tetrachloride to a temperature of between about 350°C (662°F) and about 400°C (752°F) and subsequently pass it to the aluminum chloride generator.

The injection and burning of auxiliary fuels in the reactor may be utilized to increase the temperature in the reactor and lower the preheating temperature level requirements for the titanium tetrachloride vapors. Auxiliary fuels may be any low molecular weight organic compounds capable of supporting combustion such as carbon monoxide, methane, propane, butane, pentane, hexane, benzene, xylene, toluene, or any combination thereof. In a prefered embodiment, propane is added to oxygen being introduced to the reactor at the first inlet point. Alternatively, the auxiliary fuel may be simply injected directly into the reactor. In another embodiment, plasma, such as that generated by a DC arc or inductively coupled plasma, may effectively be used to heat oxygen prior to introduction into the reactor and lower the temperature level requirements for the titanium tetrachloride vapors.

The proportion of oxygen which is introduced to the reactor at the first inlet point determines to some extent the conditions within the oxidation reactor and can therefore be varied to control these conditions. Usually at least about 50% by weight of the total oxygen feed will be introduced at the first inlet point and preferably the proportion added at the first inlet point is from about 50% to about 95% by weight of the total oxygen feed. Most preferably the proportion is from about 60% to about 95% by weight. The factor determining how much $O_2$ is fed to the first $O_2$ inlet point is determined by how much $TiCl_4$ is fed to the first $TiCl_4$ inlet. The ratio of primary $TiCl_4$ to primary $O_2$ is the one that controls size. Changing the percentage of oxygen at the first inlet point provides control over the pigment properties to allow for compensation for different variables. The percentage of primary oxgen introduced at the first inlet point will depend on the disired tint tone for the finished product. If more positive tint tones are required, the percentage of oxygen introduced at the first inlet point will decrease. Conversely, if more negative tint tones are desired, the percentage of oxygen introduced at the first inlet point will increase.

The quantity of oxidizing gas stream introduced also depends upon the proportion of oxygen present in the gas stream. There must be sufficient oxygen to fully oxidize the total amount of titanium tetrachloride introduced and usually there is more oxygen than is stoichiometrically needed. Typically, the oxidizing gas stream will provide at least about 5% by weight and preferably about 10% by weight more oxygen than is required to completely oxidize the titanium tetrachloride.

Aluminum chloride is present in the titanium tetrachloride to act as a rutilization agent, that is, to promote the formation of rutile titanium dioxide. Normally, the quantity of aluminum chloride used is sufficient to produce between about 0.3% and about 3.0% $Al_2O_3$ by weight in the titanium dioxide product. Preferably, the amount used produces from about 0.3% to about 1.5% $Al_2O_3$ by weight in the titanium dioxide product. The amount of $Al_2O_3$ is dependent on pigment grade being produced. Low durability pigments use little $Al_2O_3$.

The process of this invention is operated at a pressure above atmospheric pressure. The pressure in the reactor during oxidation is at least about 0.15 MPa above atmospheric pressure, and can range from about 0.15 MPa to about 4.0 MPa above atmospheric pressure. Preferably, the pressure range is from about 0.2 MPa to about 0.5 MPa above atmospheric pressure.

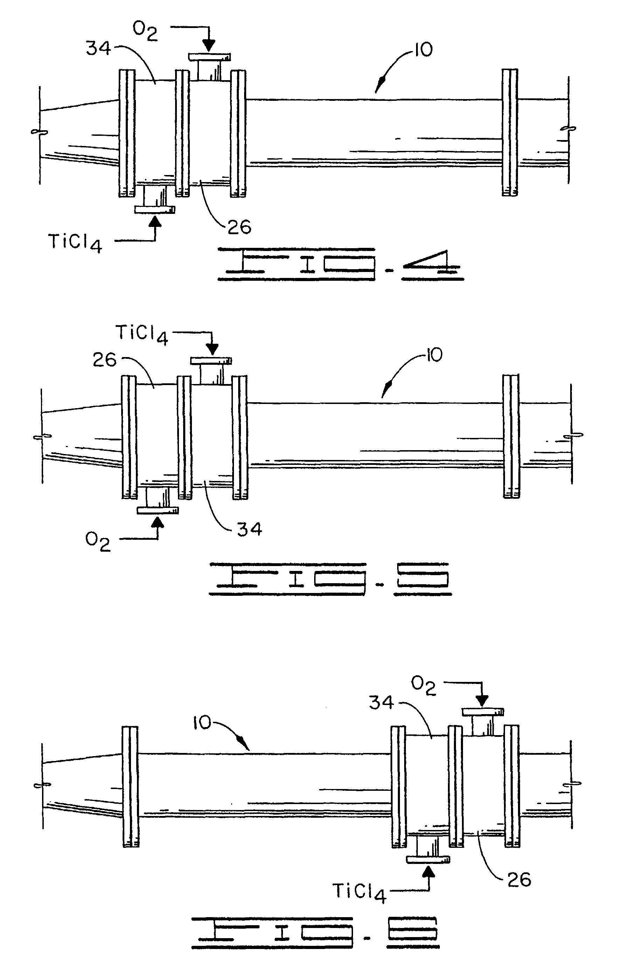

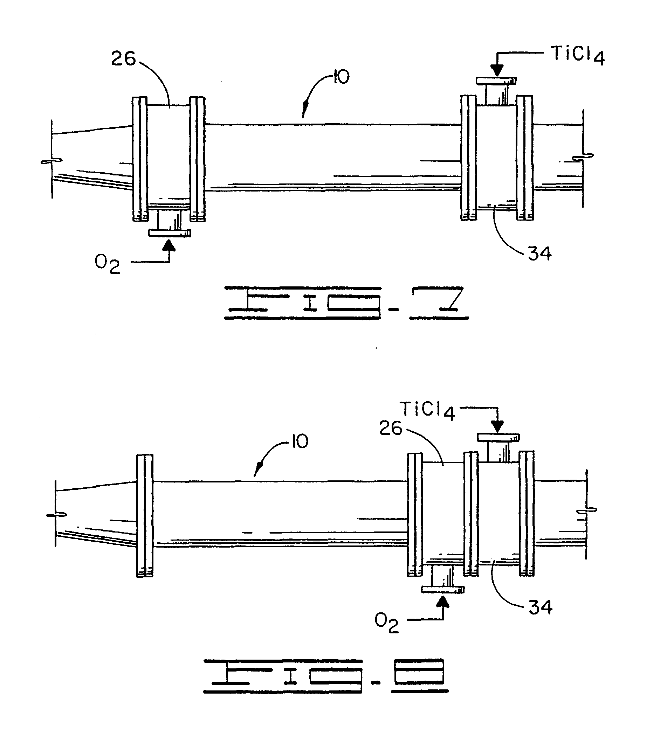

The distance between the first $TiCl_4$ introduction assembly and a second $TiCl_4$ introduction assembly and between any further inlet points is governed by the rate of feed of the titanium tetrachloride and the oxidizing gas streams at the previous inlet points. Advantageously the $TiCl_4$ to $O_2$ ratio at the start of the reaction is from about 0.5:1 to about 1.3:1. Ideally a portion of the oxygen introduced at the first oxygen inlet point will be reacted, i.e., a sufficient amount of particle nucleation and rutilization has taken place, before the reactant gas stream reaches the zone of the reactor adjacent to the second oxygen inlet point. Hence the walls are cooled to keep from forming hard accretions. No heat loss would likely be best. As shown in Figures 4-8, the second oxygen introduction assembly maybe on either side of the second $TiCl_4$ inlet point and at various distances from the first $TiCl_4$ inlet point without affecting the particle size of the pigment. The particle size of the pigment will not be affected provided the secondary oxygen is introduced into a region of the reactor in which the reaction conditions are favorable for forming titanium dioxide.

Usually, the reactors used for the process of this invention have a generally tubular shape and a portion of the oxidizing gas flow is introduced at one end. The titanium tetrachloride inlet point is close to the end where the oxidizing gas flow is introduced and is introduced through an injector of the type conventionally used for titanium tetrachloride oxidation reactors. For example, the injector may comprise a circumferential slot in the wall of the reactor, an arrangement of perforations in the reactor wall which may extend axially along the reactor, a single jet or nozzle, or an arrangement of jets or nozzles.

Any pipework and associated equipment used to conduct the mixture of titanium tetrachloride and aluminum chloride from the aluminum chloride generator to the first inlet point will usually be formed from a ceramics material to minimize corrosion. Corrosion of the reactor used for the process of the invention can also be reduced by constructing the first inlet point and the walls between the first inlet point and the second inlet point from a ceramics material.

Additives conventionally used in the oxidation of titanium tetrachloride can be used in the process of this invention. For example, alkali metal salts may be added to control the crystal size of the titanium dioxide produced. Preferably, the alkali metal salt is a potassium salt which can be added as potassium chloride to the oxidizing gas stream before the first inlet point. The amount of potassium chloride added may be from about 400 ppm up to about 600 ppm, but preferably the amount added is more than about 0.5 to about 20 ppm potassium with respect to $TiO_2$ formed. A scouring agent such as sand or titanium dioxide can also be added to help prevent fouling of the reactor walls.

The invention provides an easily controllable process for the oxidation of titanium tetrachloride with minimum contamination of the product titanium dioxide and without the use of inflammable liquids. The introduction of all the aluminum chloride with the titanium tetrachloride added at the first inlet point generally leads to easy rutilization of the titanium dioxide formed.

The particle size of the product titanium dioxide can also be adjusted by adjusting the temperature at the first inlet point and/or the pressure in the reactor.

EXAMPLE 1

Tests were performed with cold secondary oxygen, with hot secondary oxygen, and with plasma heated secondary oxygen.

Series 22. This test was run with cold secondary oxygen. The base pigment produced was Kerr-McGee Chemical Corporation (KMCC) CR 813. The raw pigment had about 0.5 percent $Al_2O_3$ and there was no potassium injection. Configurations for the oxidizer as shown in Figures 4, 5 and 6 were tested. The CBU of the raw pigment as a function of the primary $TiCl_4$ to primary $O_2$ ratio is shown in Figure 2.

Series 24. This test series was similar to Series 22 except potassium was added at the dual slot oxidizer (DSO) and methane was added with the secondary $TiCl_4$. The results of this test are shown in Figure 2. The two points with $TiCl_4$ to $O_2$ ratios of about 1.2 and CBUs of about -3 were obtained by adding a secondary methane flow in an attempt to improve rutilization.

Series 27. This test was performed while producing commercial $TiO_2$. One bulk sample was produced with a latex tint tone of -4.2 and a gloss of about 72 when finished with intense grinding. The primary $TiCl_4$ to primary $O_2$ ratio used was about 0.8 and the CBU of the sample was about -2.2. The CBU of a sample produced with a ratio of about 1.02, but not finished was -1.42. suggesting a finished tint tone of about -4.1 or lower. The intense milling was performed to determine whether the more positive CBU was due to larger particles or to agglomeration. The results indicated the raw pigment could be ground to a stable size before finishing and that the pigment was relatively easy to filter. This indicates the raw pigment was large particles rather than agglomerates.

Series 49. The three previous test series indicated that the rutilization decreased slightly with the use of cold secondary oxygen. In this test, the oxygen flow was split so that two-thirds of the $O_2$ was fed upstream of the primary $TiCl_4$ slot and one-third was fed at the end of the cone. The DSO was located about three feet downstream from the secondary $O_2$ injection slot. The oxidizer configuration for this test is also given in Figure 6. Two bulk samples from this test configuration and two samples from a control oxidizer were finished. The tint tones were -3.2 for the samples with secondary oxygen and about -4.2 for the control samples. All other properties of the finished pigments appeared to be about the same.

Series 57 and 58. Plasma was used to heat the secondary oxygen for these tests. The main objective of the tests was to increase rutilization relative to that possible using oxygen heated with a heat exchanger. The pigment produced had positive CBUs as in other cases using secondary $O_2$ with the rutilization being equivalent.

The CBU of the raw pigment increased as the

ratio of $TiCl_4$ to $O_2$ increased at the front of the oxidizer in Figures 2 and 3. The slope of the line increases rapidly in moving from Figure 2 through Figure 3. This suggests that another variable such as the increase in production rates or the position of the potassium injection has increased the effectiveness of the secondary oxygen. The data in Figure 2 was obtained for a KMCC CR 813 raw pigment indicating that there was no potassium injection, the data in Figure 3 was obtained with potassium injected at the DSO. The ratio of primary to secondary $TiCl_4$ injection (Rsp) was 0.5 for the data in Figure 2 and Figure 3 indicating that the Rsp was not the variable affecting the dependence of CBU on the $TiCl_4$ to $O_2$ ratio.

Test Configuration:

A description of the equipment and the basis for the design is provided below in the Experimental Configuration and a schematic showing the oxygen flow control is given in Figure 1. The primary $O_2$ and $TiCl_4$ were fed to the oxidizer as is current practice. However, the primary $O_2$ flow was split and a measured part of the oxygen flow sent through a preheater to second $O_2$ slot located immediately downstream of the second $TiCl_4$ slot. The secondary $O_2$ flow rate was measured while the $O_2$ was cold and then sent to a preheater where its temperature was controlled. It was possible to control particle size using the system shown schematically in Figure 1.

The configuration for the oxidizer is basically the same as shown in Figure 4. Figure 3 results indicate the configuration of the oxidizer does not have a major effect on the pigment properties but the DSO and secondary oxygen spool was less affected by abrasion if the spools were further downstream than in Figures 4 or 5. Initially potassium was added at the end of the cone but several samples were collected with potassium added at the DSO, particularly if rutilization was low or the CBU was not positive enough. The secondary oxygen preheater was installed on a 6-inch line, and the control line, was also a 6-inch line. The test line and control line were operated as near full capacity as possible.

The oxygen preheater must be capable of preheating about one half the total oxygen normally fed to a 6-inch oxidizer to $1038°C$ ($1,900°F$). An objective of the test was to determine the minimum temperature of the secondary oxygen required for acceptable rutilization at each alumina level.

Test Procedures:

A detailed discussion of the test procedures is provided below in the Experimental Procedures - Test Series 62. Three sets of tests were performed. Each set was at a different coburned $Al_2O_3$ level. The lower level was at approximately 0.5 percent and the higher level was at about 1.2 percent coburned $Al_2O_3$. The third series was intermediate between these levels. The prima-

ry $TiCl_4$ to primary oxygen ratio was varied from the minimum level required to protect the heat exchanger tubes and keep the secondary oxygen slot open to a maximum $TiCl_4$ to $O_2$ ratio of about 1 at the front of the oxidizer. Depending on the rate of change either two or three intermediate samples were collected. Bulk samples were collected from a control line, at the start of the test series and the end of the test series.

Temperatures were measured during the tests to obtain axial profiles along the length of the tube and to obtain a radial temperature profile with $O_2$ streams that were independently controlled and heated at the end of the cone for each-different $TiCl_4$ to $O_2$ ratio.

All the bulk samples from this test series were finished.

EXAMPLE 2

The primary purpose of the secondary oxygen addition was to develop a method yielding improved raw pigment properties. The pigment particles produced were larger and thus the finished pigments had a more positive tint tone. The pigments produced with secondary oxygen were less aggregated than pigment produced using the prior art oxidizer configuration by virtue of the fact that the pigment gets larger by coalescing. Some aggregation was likely present as a result of interactions of the pigment particles on the wall of the oxidizer. Secondary oxygen does not reduce aggregation that occurs as a result of such interactions. The reasons particles coalesce to a larger size with secondary oxygen are likely because rutilization of the particles occurs more slowly and because the initial concentration of $TiCl_4$ is higher. Analysis of the results indicated that the main variable affecting raw pigment CBU is the $TiCl_4$ to $O_2$ ratio at the primary slot.

Test Configuration

The configuration of the oxidizer injection slots is as shown in Figure 6. The secondary oxygen was heated in a heat exchanger consisting of a radiant section with three identical helical coils and a convection section at the top consisting of a number of J tubes welded together. The unit was designed to deliver 330 scfm of heated oxygen at temperatures as high as $1038°C$ ($1900°F$).

The temperature of the oxygen in the front of the oxidizer was higher for the secondary oxygen tests than for normal operation because the amount of $TiCl_4$ per unit of oxygen is higher. This higher temperature came from using a greater amount of propane per unit of oxygen for supported combustion at the sand scour nozzle. The propane to $TiCl_4$ ratio required to reach the same mix temperature is therefore about the same.

Test Procedures

The objective of this series of tests was to determine the effect of different $TiCl_4$ to $O_2$ ratios at the primary slot on raw pigment properties. The ratio of $TiCl_4$ to $O_2$ was varied from about 0.6 to about 1.0 with $Al_2O_3$ compositions varying from about 0.5 percent to about 1.2 percent. The lower value of the $TiCl_4$ to $O_2$ ratio was determined by the minimum value required to keep the secondary oxygen slot from plugging. The maximum ratio was the ratio that would not result in a decrease in particle size or a decrease in CBU with an increase in the ratio.

The test series was divided into three subseries. The test series and major variables in the test were as follows:

Series 62-1. Raw pigment with an $Al_2O_3$ content of 0.5 percent was produced in this test series. The oxidizer was started at the flutter point at the start of each test, the Rsp was set at 0.2 to 0.25, and the secondary oxygen fed to the oxidizer at 927°C (1700°F). The first test was at the minimum $TiCl_4$ to $O_2$ ratio, the RTO, and the final test of this subseries was at a ratio of about 1. Two or three tests were performed at intermediate ratios. Tube samples were taken to evaluate each operating condition. If the rutilization was below about 98.3, the amount of propane used for supported combustion was increased by 1 scfm. The amount of propane was increased by up to 4 scfin until it was obvious that increasing the amount of propane did not increase rutilization. The secondary $O_2$ temperature was then raised in 38°C (100°F) increments until the temperature reached 1038°C (1900°F) or acceptable rutilization was attained. If the percent rutile was above 99.6 percent, the $TiCl_4$ to $O_2$ ratio was increased to approximately 1.0 and if the rutilization remained high the secondary oxygen temperature was decreased in 38°C (100°F) increments to determine the minimum preheat required to attain 100 percent rutilization. Once this temperature was determined for an RTO of 1.0, the ratio was decreased incrementally to the minimum value described. When this sequence of tests was completed, the Rsp was increased to about 0.3 to 0.35 to determine if conditions could be found that would produce approximately 100 percent rutilization and no $TiCl_4$ slip.

Series 62-2. This test series was similar to Series 62-1 except it was performed while producing a raw pigment with about 1.2 percent coburned $Al_2O_3$. The temperature of the secondary oxygen was set lower than 1038°C (1900°F).

Series 62-3. A series of tests at an intermediate $Al_2O_3$ level of about 0.8 percent was performed using the same sequence as for Series 62-1 and 62-2.

Small samples collected while the unit was operating under steady conditions were used to determine the process variability of an oxidizer running with secondary $O_2$.

Changes may be made in the combination and arrangement of the various parts, elements, steps and procedures described herein.

**Claims**

1. A process for the production of titanium dioxide comprising reacting titanium tetrachloride with oxygen at a pressure at atmospheric pressure or above and at a reaction temperature of at least about 700°C in an oxidation reactor, the oxygen being introduced into the reactor at a first inlet point before any titanium tetrachloride is introduced and at least one further inlet point, the titanium tetrachloride introduced into the reactor being heated to a temperature of less than about 427°C prior to introduction.

2. The process according to claim 1 wherein the titanium tetrachloride introduced into the reactor is an admixture with aluminum chloride.

3. The process according to claim 2 wherein the aluminum chloride is formed by the reaction of aluminum and chlorine and the heat generated by this reaction is used to heat the titanium tetrachloride introduced into the reactor and wherein titanium tetrachloride is first heated to a temperature between about 350°C and about 400°C before being passed to an aluminum chloride generator.

4. The process according to claim 2 or claim 3 wherein aluminum chloride is introduced in an amount sufficient to produce between about 0.3 and about 3.0 percent by weight $Al_2O_3$ in the product titanium dioxide.

5. The process according to any one of the preceding claims wherein titanium tetrachloride is introduced into the reactor at a temperature of about 399°C.

6. The process according to any one of the preceding claims wherein oxygen introduced at the first inlet point is preheated to a temperature between about 815°C and about 982°C.

7. The process according to any one of the preceding claims wherein oxygen introduced at the further inlet point is heated to a temperature between about 25°C and about 1037°C.

8. The process according to claim 7 wherein from about 50 to about 95 percent by weight of the oxygen is introduced at the first inlet point.

9. The process according to any one of the preceding claims wherein the amount of oxygen introduced is equivalent to at least about 5 percent by weight more than is required to completely oxidize the titanium tetrachloride.

10. The process according to any one of the preceding claims wherein the pressure in the reactor is between about 0.15 MPa and about 4.0 MPa above atmospheric pressure.

11. The process according to any one of the preceding claims wherein an auxiliary fuel is added to the oxygen being introduced to the reactor at the first inlet point wherein the auxiliary fuel is carbon monoxide, methane, propane, butane, pentane, hexane, benzene, xylene, toluene, or combinations thereof.

12. The process according to any one of claims 1 to 10 wherein plasma is used to heat the oxygen being introduced at the first inlet point.

13. A reactor for use in producing titanium d'oxide by reacting titanium tetrachloride vapors with oxygen comprising:

means for forming a first reaction zone;
an oxidizing gas introduction assembly for receiving oxygen at a predetermined temperature level and passing oxygen into the first reaction zone, the oxidizing gas introduction assembly comprising a conduit having an upstream and a downstream end and an opening extending there through intersecting the upstream and the downstream ends and oxygen being passable through the opening in the conduit for passing into the first reaction zone;
a first titanium tetrachloride introduction assembly for receiving titanium tetrachloride vapors at a first predetermined temperature and passing titanium tetrachloride vapors into the first reaction zone for reacting with oxygen to produce a mixture including titanium dioxide;
means for passing the titanium tetrachloride vapor at a predetermined temperature into the first reaction zone;
including means for forming a second reaction zone spaced a distance downstream from the first reaction zone;
a second oxidizing gas introduction assembly for receiving oxygen at a second predetermined temperature and passing the oxygen at the second temperature into the reactor for reaction with titanium tetrachloride in the mixture from the first reaction zone to produce a mixture including titanium dioxide, the reaction of oxygen at the second temperature with the mixture passed from the first reaction zone reducing the volume of oxygen at the first temperature level required for a given volume of titanium dioxide produced; and

means for passing the oxygen at the second temperature into the reactor.

14. The reactor of claim 13 further comprising:

an aluminum chloride generator for heating the titanium tetrachloride vapors to a first predetermined temperature; and
a flowline for passing titanium tetrachloride from the aluminum chloride generator to the titanium tetrachloride introduction assembly.

15. The reactor of claim 13 or claim 14 further comprising:

oxygen preheat equipment for heating oxygen to the predetermined temperature level; and
means for passing the heated oxygen from the oxygen preheat equipment to the oxidizing gas introduction assembly.

16. The reactor of any one of claims 13 to 15 further comprising:

a second oxidizing gas preheat equipment for preheating oxygen to the second predetermined temperature; and
means for passing oxygen from the second preheat equipment to the second oxidizing gas introduction assembly.

17. The reactor of any one of claims 13 to 16 wherein:

the opening through the section of the first reaction zone is defined further as being axially aligned with the opening in the conduit; and
the opening through the section of the second reaction zone is axially aligned with the opening through the section forming the first reaction zone.

18. The reactor of any one of claims 13 to 17 further comprising a second titanium tetrachloride introduction assembly spaced a distance from the first titanium tetrachloride introduction assembly for receiving titanium tetrachloride at an elevated temperature and passing titanium tetrachloride vapors into the second reaction zone.

19. A process for the production of titanium dioxide in an oxidation reactor having a first reaction zone and a second reaction zone spaced a distance from the first reaction zone, the process comprising:

introducing an amount of oxygen in the first reaction zone;

introducing an amount of titanium tetrachloride in the first reaction zone wherein the amount of oxygen introduced in the first reaction zone and the amount of titanium tetrachloride introduced in the first reaction zone defines a titanium tetrachloride to oxygen ratio;

reacting the titanium tetrachloride with the oxygen at a reaction temperature of at least about 700°C to produce titanium dioxide;

adjusting the titanium tetrachloride to oxygen ratio in the first reaction zone to control particle size and properties of the titanium dioxide; and

introducing secondary oxygen in the reactor after the titanium tetrachloride has been introduced in the first reaction zone wherein the secondary oxygen is introduced in an amount sufficient to react with unreacted titanium tetrachloride.

20. The process according to claim 19 further comprising admixing the titanium tetrachloride introduced into the reactor with aluminum chloride before introducing the titanium tetrachloride into the reactor.

21. The process according to claim 20 further comprising:

generating the aluminum chloride by reacting aluminum with chlorine in an aluminum chloride generator, and

heating the titanium tetrachloride introduced into the first reaction zone with heat generated from the aluminum chloride generator.

22. The process according to claim 20 or claim 21 wherein the aluminum chloride is introduced in an amount sufficient to produce between about 0.3 and about 3.0 percent by weight $Al_2O_3$ in the titanium dioxide product.

23. The process according to any one of claims 19 to 22 further comprising introducing a second addition of titanium tetrachloride into the reactor near the second reaction zone.

24. The process according to claim 23 further comprising admixing the second addition of titanium tetrachloride introduced into the reactor with aluminum chloride before introducing the titanium tetrachloride into the reactor.

25. The process according to any one of claims 19 to 24 wherein the titanium tetrachloride is introduced into the reactor at a temperature of about 399°C.

26. The process according to any one of claims 19 to 25 further comprising preheating the oxygen introduced in the first reaction zone to a temperature between about 815°C and about 982°C.

27. The process according to any one of claims 19 to 26 further comprising preheating the secondary oxygen introduced in the second reaction zone to a temperature between about 25°C and about 1037°C.

28. The process according to any one of claims 19 to 26 wherein from about 50 to about 95 percent by weight of the oxygen introduced in the reactor is introduced in the first reaction zone.

29. The process according to any one of claims 19 to 28 wherein the amount of oxygen introduced in the first reaction zone and the second reaction zone is equivalent to at least about 5 percent by weight more than is required to completely oxidize the amount of titanium tetrachloride introduced in the reactor.

30. The process according to any one of claims 19 to 29 further comprising operating the reactor at a pressure between about 0.15 MPa and about 4.0 MPa above atmospheric pressure.

31. The process according to any one of claims 19 to 30 further comprising adding an auxiliary fuel to the oxygen being introduced in the first reaction zone wherein the auxiliary fuel is carbon monoxide, methane, propane, butane, pentane, hexane, benzene, xylene, toluene, or combinations thereof.

32. The process according to any one of claims 19 to 30 further comprising heating the oxygen being introduced in the first reaction zone using plasma.

**Patentansprüche**

1. Verfahren zur Herstellung von Titandioxid umfassend: Umsetzen von Titantetrachlorid mit Sauerstoff bei Atmosphärendruck oder darüber und bei einer Temperatur von mindestens ca. 700 °C in einem Oxidationsreaktor, wobei das Sauerstoff in den Reaktor an einem ersten Einlaßpunkt eingeführt wird, bevor Titantetrachlorid an einem mindestens weiteren Einlaßpunkt eingeführt wird, wobei das in den Reaktor eingeführte Titantetrachlorid vor der Einführung auf eine Temperatur von weniger als ca. 427 °C erhitzt wird.

2. Verfahren nach Anspruch 1, dadurch gekennzeichnet, daß das in den Reaktor eingeführte Titantetrachlorid eine Mischung mit Aluminiumchlorid ist.

3.  Verfahren nach Anspruch 2, dadurch gekennzeichnet, daß das Aluminiumchlorid durch Umsetzung von Aluminium und Chlor ausgebildet wird und die durch diese Umsetzung erzeugte Wärme verwendet wird, um das in den Reaktor eingeführte Titantetrachlorid zu erhitzen, und worin das Titantetrachlorid zuerst auf eine Temperatur zwischen ca. 350 °C und ca. 400 °C erhitzt wird, bevor es einem Aluminiumchloridgenerator zugeführt wird.

4.  Verfahren nach Anspruch 2 oder Anspruch 3, dadurch gekennzeichnet, daß das Aluminiumchlorid in einer Menge eingeführt wird, die ausreicht, um zwischen 0,3 und ca. 3,0 Gew.-% $Al_2O_3$ im Titandioxid-Produkt zu bilden.

5.  Verfahren nach einem der vorhergehenden Ansprüche, dadurch gekennzeichnet, daß das Titantetrachlorid in den Reaktor bei einer Temperatur von ca. 399 °C eingeführt wird.

6.  Verfahren nach einem der vorhergehenden Ansprüche, dadurch gekennzeichnet, daß der beim ersten Einlaßpunkt eingeführte Sauerstoff auf eine Temperatur zwischen ca. 815 °C und ca. 982 °C erhitzt wird.

7.  Verfahren nach einem der vorhergehenden Ansprüche, dadurch gekennzeichnet, daß der beim weiteren Einlaßpunkt zugeführte Sauerstoff auf eine Temperatur zwischen ca. 25 °C und ca. 1037 °C erhitzt wird.

8.  Verfahren nach Anspruch 7, dadurch gekennzeichnet, daß ca. 50 bis ca. 95 Gew.-% des Sauerstoffs am ersten Einlaßpunkt zugeführt werden.

9.  Verfahren nach einem der vorhergehenden Ansprüche, dadurch gekennzeichnet, daß die Menge an Sauerstoff einer Menge äquivalent ist, die mindestens ca. 5 Gew.-% größer ist als die, die zur vollständigen Oxidation des Titantetrachlorids erforderlich ist.

10. Verfahren nach einem der vorhergehenden Ansprüche, dadurch gekennzeichnet, daß das Druck im Reaktor zwischen ca. 0,15 MPa und ca. 4,0 MPa über Atmosphärendruck liegt.

11. Verfahren nach einem der vorhergehenden Ansprüche, dadurch gekennzeichnet, daß zu dem dem Reaktor beim ersten Einlaßpunkt zugeführten Sauerstoff zusätzlicher Brennstoff zugeführt wird, wobei der zusätzliche Brennstoff Kohlenmonoxid, Methan, Propan, Butan, Pentan, Hexan, Benzol, Xylol, Toluol oder eine Kombination davon ist.

12. Verfahren nach einem der Ansprüche 1 bis 10, dadurch gekennzeichnet, daß zum Erhitzen des am ersten Einlaßpunkt eingeführten Sauerstoffs Plasma verwendet wird.

13. Reaktor zur Verwendung zur Herstellung von Titandioxid durch Umsetzung von Titantetrachlorid-Dämpfen mit Sauerstoff umfassend:

    Einrichtungen zur Ausbildung einer ersten Reaktionszone; eine Anordnung zur Einführung von oxidierendem Gas zur Aufnahme von Sauerstoff bei einer bestimmten ersten Temperatur und Durchleiten von Sauerstoff in die erste Reaktionszone, wobei die Anordnung zur Einführung des oxidierenden Gases eine Leitung umfaßt, die ein stromaufwärtiges und ein stromabwärtiges Ende aufweist und eine Öffnung, die sich dadurch erstreckt, und das stromaufwärtige Ende und das stromabwärtige Ende schneidet, und Sauerstoff durch die Öffnung in der Leitung hindurchgehen kann, um in die erste Reaktionszone zu fließen;
    eine erste Titantetrachlorid-Einführungsanordnung zur Aufnahme von Titantetrachlorid-Dämpfen bei einer bestimmten ersten Temperatur und Leiten der Titantetrachlorid-Dämpfe in die erste Reaktionszone, um mit dem Sauerstoff unter Bildung einer Mischung, die Titandioxid umfaßt, zu bilden;
    Einrichtungen zur Einführung von Titantetrachlorid-Dampf bei einer bestimmten Temperatur in die erste Reaktionszone;
    einschließlich von Einrichtungen zur Bildung einer zweiten Reaktionszone, die in einer Entfernung stromabwärts von der ersten Reaktionszone angeordnet ist; eine zweite Oxidationsgaseinführungsanordnung zur Aufnahme von Sauerstoff bei einer zweiten bestimmten Temperatur und Einführen des Sauerstoff bei der zweiten Temperatur in den Reaktor zur Umsetzung mit Titantetrachlorid in die Mischung aus der ersten Reaktionszone, um eine Mischung herzustellen, die Titandioxid umfaßt, wobei die Umsetzung von Sauerstoff bei der zweiten Temperatur mit der Mischung aus der ersten Reaktionszone das Volumen an Sauerstoff beim ersten Temperaturniveau für ein bestimmtes Volumen an hergestelltem Titandioxid verringert;
    und
    Einrichtungen zur Einleitung von Sauerstoff an einer zweiten Temperatur in den Reaktor.

14. Reaktor nach Anspruch 13, dadurch gekennzeichnet, daß er außerdem enthält:

    einen Aluminiumchloridgenerator zum Erhitzen von Titantetrachlorid-Dämpfen auf eine erste bestimmte Temperatur; und
eine Strömungslinie zur Führung von Titantetrachlorid aus dem Aluminiumchloridgenerator zur Titantetrachlorideinführungsanordnung.

15. Reaktor nach Anspruch 13 oder Anspruch 14, dadurch gekennzeichnet, daß er außerdem enthält:

eine Sauerstoff-Vorerhitzeinrichtung zum Erhitzen von Sauerstoff auf ein bestimmtes Temperaturniveau;
Einrichtungen zum Führen des erhitzten Sauerstoffs von der Sauerstoff-Vorerhitzeinrichtung und zur Einführungsanordnung für das oxidierende Gas.

16. Reaktor nach einem der Ansprüche 13 bis 15, dadurch gekennzeichnet, daß er außerdem umfaßt:

eine zweite Vorerhitzeinrichtung für ein oxidierendes Gas zum Vorerhitzen von Sauerstoff auf die zweite Temperatur; und
Einrichtungen zum Führen von Sauerstoff von der zweiten Vorerhitzeinrichtung zur zweiten Einführungseinrichtung für das oxidierende Gas.

17. Reaktor nach einem der Ansprüche 13 bis 16, dadurch gekennzeichnet, daß die Öffnung durch den Querschnitt der ersten Reaktionszone außerdem mit der Öffnung der Leitung axial ausgerichtet ist, und die Öffnung durch den Querschnitt der zweiten Reaktionszone axial mit der Öffnung durch den Querschnitt, der die erste Reaktionszone bildet ausgerichtet ist.

18. Reaktor nach einem der Ansprüche 13 bis 17, dadurch gekennzeichnet, daß er außerdem eine zweite Einführungsanordnung für Titantetrachlorid umfaßt, die von der ersten Titantetrachlorid-Einführungseinrichtung beabstandet angeordnet ist, um Titantetrachlorid bei einer erhöhten Temperatur aufzunehmen und Titantetrachlorid-Dämpfe in die zweite Reaktionszone zu führen.

19. Verfahren zur Herstellung von Titandioxid in einem Oxidationsreaktor mit einer ersten Reaktionszone und einer zweiten Reaktionszone, die von der ersten Reaktionszone beabstandet ist, wobei das Verfahren umfaßt:

Einführen einer Menge an Sauerstoff in die erste Reaktionszone;
Einführen einer Menge an Titantetrachlorid in die erste Reaktionszone, worin die Menge des in die erste Reaktionszone eingeführten Sauerstoffs und die Menge an in die erste Reaktionszone eingeführtem Titantetrachlorid das Titantetrachlorid/Sauerstoff-Verhältnis bestimmen;
Umsetzen des Titantetrachlorids mit dem Sauerstoff bei einer Reaktionstemperatur von mindestens ca. 700 °C, um Titandioxid herzustellen;
Bestimmen des Titantetrachlorid/Sauerstoff-Verhältnisses in der ersten Reaktionszone um die Teilchengröße und die Eigenschaften des Titandioxids zu kontrollieren; und
Einführen eines zweiten Sauerstoffs in den Reaktor nachdem das Titantetrachlorid in die erste Reaktionszone eingeführt worden war, wobei der zweite Sauerstoff in einer Menge eingeführt wird, der ausreicht, um mit dem unumgesetzten Titantetrachlorid zu reagieren.

20. Verfahren nach Anspruch 19, dadurch gekennzeichnet, daß das Mischen des in den Reaktor eingeführten Titantetrachlorids mit dem Aluminiumchlorid vor der Einführung des Titantetrachlorids in den Reaktor erfolgt.

21. Verfahren nach Anspruch 20, dadurch gekennzeichnet, daß es weiter umfaßt:

Ausbilden von Aluminiumchlorid durch Umsetzen von Aluminium mit Chlor in einem Aluminiunchloridgenerator, und
Erhitzen des in die erste Reaktionszone eingeführten Titantetrachlorids mit der aus dem Aluminiumchloridgenerator erzeugten Wärme.

22. Verfahren nach Anspruch 20 oder 21, dadurch gekennzeichnet, daß das Aluminiumchlorid in einer Menge eingeführt wird, die ausreicht, um zwischen ca. 0,3 und ca. 3,0 Gew.-% $Al_2O_3$ im Titandioxidprodukt herzustellen.

23. Verfahren nach einem der Ansprüche 19 bis 22, dadurch gekennzeichnet, daß es außerdem eine zweite Zugabe von Titantetrachlorid zum Reaktor in der Nähe der Reaktionszone umfaßt.

24. Verfahren nach Anspruch 23, dadurch gekennzeichnet, daß er außerdem das Mischen der zweiten Zugabe des in den Reaktor eingeführten Titantetrachlorids mit dem Aluminiumchlorid vor der Einführung des Titantetrachlorids in den Reaktor umfaßt.

25. Verfahren nach einem der Ansprüche 19 bis 24, dadurch gekennzeichnet, daß das Titantetrachlorid in den Reaktor bei einer Temperatur von 299 °C eingeführt wird.

26. Verfahren nach einem der Ansprüche 19 bis 25, dadurch gekennzeichnet, daß es außerdem das Vorerwärmen des in die erste Reaktionszone eingeführten Sauerstoffs auf eine Temperatur zwischen ca. 815 °C und ca. 982 °C umfaßt.

27. Verfahren nach einem der Ansprüche 19 bis 26, dadurch gekennzeichnet, daß es außerdem das Vorerhitzen des zweiten in die zweite Reaktionszone eingeführten Sauerstoffs auf eine Temperatur zwischen ca. 25 °C und ca. 1037 °C umfaßt.

28. Verfahren nach einem der Ansprüche 19 bis 26, dadurch gekennzeichnet, daß außerdem ca. 50 bis ca. 95 Gew.-% des in den Reaktor eingeführten Sauerstoffs in die erste Reaktionszone eingeführt werden.

29. Verfahren nach einem der Ansprüche 19 bis 28, dadurch gekennzeichnet, daß die Menge des in die erste Reaktionszone und die zweite Reaktionszone eingeführten Sauerstoffs äquivalent ist um mindestens mehr als 5 Gew.-%, als sie für eine vollständige Oxidation der Menge an in den Reaktor eingeführtem Titantetrachlorid erforderlich sind.

30. Verfahren nach einem der Ansprüche 19 bis 29, dadurch gekennzeichnet, daß es außerdem umfaßt den Betrieb des Reaktors bei einem Druck zwischen ca. 0,15 MPa und zwischen ca. 4,0 MPa oberhalb von Atmosphärendruck.

31. Verfahren nach einem der Ansprüche 19 bis 30, dadurch gekennzeichnet, daß es außerdem die Zugabe eine Hilfsbrennstoffes zum Sauerstoff umfaßt, der in die erste Reaktionszone eingeführt wird, wobei der Hilfsbrennstoff Kohlenmonoxid, Methan, Propan, Butan, Pentan, Hexan, Benzol, Xylol, Toluol oder eine Kombination davon ist.

32. Verfahren nach einem der Ansprüche 19 bis 30, dadurch gekennzeichnet, daß Erhitzen des in die erste Reaktionszone eingeführten Sauerstoff unter Verwendung von Plasma umfaßt.

**Revendications**

1. Procédé de production de dioxyde de titane comprenant l'étape consistant à faire réagir du tétrachlorure de titane avec de l'oxygène à une pression supérieure ou égale à la pression atmosphérique et à une température de réaction d'au moins environ 700°C dans un réacteur d'oxydation, l'oxygène étant introduit dans le réacteur en un premier point d'admission avant toute introduction de tétrachlorure de titane et en au moins un autre point d'admission, le tétrachlorure de titane introduit dans le réacteur étant chauffé à une température inférieure à environ 427°C avant introduction.

2. Procédé selon la revendication 1, dans lequel le tétrachlorure de titane introduit dans le réacteur est en mélange avec du chlorure d'aluminium.

3. Procédé selon la revendication 2, dans lequel le chlorure d'aluminium est formé par la réaction d'aluminium et de chlore et la chaleur dégagée par cette réaction est utilisée pour chauffer le tétrachlorure de titane introduit dans le réacteur, et dans lequel le tétrachlorure de titane est tout d'abord chauffé à une température comprise entre environ 350°C et environ 400°C avant qu'on le transfère vers un générateur de chlorure d'aluminium.

4. Procédé selon la revendication 2 ou la revendication 3, dans lequel le chlorure d'aluminium est introduit en une quantité suffisante pour produire entre environ 0,3 et environ 3,0 pour cent en poids d'$Al_2O_3$ dans le produit dioxyde de titane.

5. Procédé selon l'une quelconque des revendications précédentes, dans lequel le tétrachlorure de titane est introduit dans le réacteur à une température d'environ 399°C.

6. Procédé selon l'une quelconque des revendications précédentes, dans lequel l'oxygène introduit au premier point d'admission est préchauffé à une température comprise entre environ 815°C et environ 982°C.

7. Procédé selon l'une quelconque des revendications précédentes, dans lequel l'oxygène introduit au premier point d'admission est chauffé à une température comprise entre environ 25°C et environ 1037°C.

8. Procédé selon la revendication 7, dans lequel on introduit entre environ 50 et environ 95 pour cent en poids d'oxygène au premier point d'admission.

9. Procédé selon l'une quelconque des revendications précédentes, dans lequel la quantité d'oxygène introduite est équivalente à au moins environ 5% en poids supérieure à celle nécessaire pour oxyder complètement le tétrachlorure de titane.

10. Procédé selon l'une quelconque des revendications précédentes, dans lequel la pression dans le réacteur est supérieure à la pression atmosphérique d'environ 0,15 MPa à environ 4,0 MPa.

11. Procédé selon l'une quelconque des revendications précédentes, dans lequel on ajoute un combustible auxiliaire à l'oxygène introduit dans le réacteur au premier point d'admission, le combustible auxiliaire étant du monoxyde de carbone, du méthane, du propane, du butane, du pentane, de l'hexane, du benzène, du xylène, du toluène, ou des combinaisons de ceux-ci.

12. Procédé selon l'une quelconque des revendications 1 à 10, dans lequel on utilise un plasma pour chauffer l'oxygène introduit au premier point d'admission.

13. Réacteur destiné à être utilisé dans la production de dioxyde de titane par réaction de vapeur de tétrachlorure de titane avec de l'oxygène comprenant :

un dispositif pour la formation d'une première zone de réaction ;
un assemblage d'introduction d'un gaz oxydant pour recevoir l'oxygène à un niveau de température prédéterminé et transférer l'oxygène dans la première zone de réaction, l'assemblage d'introduction du gaz oxydant comprenant un conduit comportant une extrémité amont et une extrémité avale et une ouverture qui s'étend en travers en coupant les extrémités amont et avale, l'oxygène pouvant passer par l'ouverture dans le conduit pour être transféré dans la première zone de réaction ;
un premier assemblage d'introduction du tétrachlorure de titane pour recevoir les vapeurs de tétrachlorure de titane à une première température prédéterminée et transférer les vapeurs de tétrachlorure de titane dans la première zone de réaction pour qu'elles réagissent avec l'oxygène afin de produire un mélange incluant du dioxyde de titane ; un dispositif pour transférer la vapeur de tétrachlorure de titane à une température prédéterminée dans la première zone de réaction ;
incluant un dispositif pour la formation d'une seconde zone de réaction disposé à une certaine distance en aval de la première zone de réaction ;
un second assemblage d'introduction de gaz oxydant pour recevoir l'oxygène à une seconde température prédéterminée et transférer l'oxygène à la seconde température dans le réacteur pour qu'il réagisse avec le tétrachlorure de titane dans le mélange provenant de la première zone de réaction afin de produire un mélange incluant du dioxyde de titane, la réaction de l'oxygène à la seconde température avec le mélange qui est transféré à partir de la première zone de réaction réduisant le volume d'oxygène au premier niveau de température nécessaire pour un volume donné de dioxyde de titane produit ; et
un dispositif pour le transfert de l'oxygène à la seconde température dans le réacteur.

14. Réacteur selon la revendication 13, comprenant en outre :

un générateur de chlorure d'aluminium pour chauffer les vapeurs de tétrachlorure de titane à une première température prédéterminée ; et
une ligne de liaison pour transférer le tétrachlorure de titane du générateur de chlorure d'aluminium vers l'assemblage d'introduction du tétrachlorure de titane.

15. Réacteur selon la revendication 13 ou la revendication 14 comprenant en outre :

un équipement de préchauffage d'oxygène pour chauffer l'oxygène au niveau de température prédéterminé ; et
un dispositif pour transférer l'oxygène chauffé de l'équipement de préchauffage d'oxygène vers l'assemblage d'introduction du gaz oxydant.

16. Réacteur selon l'une quelconque des revendications 13 à 15 comprenant en outre :

un second équipement de préchauffage du gaz oxydant pour le préchauffage de l'oxygène à la seconde température prédéterminée ; et
un dispositif pour le transfert de l'oxygène du second équipement de préchauffage vers le second assemblage d'introduction du gaz oxydant.

17. Réacteur selon l'une quelconque des revendications 13 à 16, dans lequel :

l'ouverture à travers la section de la première zone de réaction est définie en outre comme étant axialement alignée avec l'ouverture dans le conduit ; et
l'ouverture à travers la section de la seconde zone de réaction est axialement alignée avec l'ouverture traversant la section formant la première zone de réaction.

18. Réacteur selon l'une quelconque des revendications 13 à 17, comprenant en outre un second assemblage d'introduction de tétrachlorure de titane disposé à une certaine distance du premier assemblage d'introduction de tétrachlorure de titane destiné à recevoir du tétrachlorure de titane à une température élevée et à transférer les vapeurs de tétrachlorure de titane dans la seconde zone de réaction.

19. Procédé de production de dioxyde de titane dans un réacteur d'oxydation comprenant une première zone de réaction et une seconde zone de réaction placée à une certaine distance de la première zone de réaction, le procédé comprenant les étapes consistant :

à introduire une quantité d'oxygène dans la première zone de réaction ;

à introduire une quantité de tétrachlorure de titane dans la première zone de réaction, la quantité d'oxygène introduite dans la première zone de réaction et la quantité de tétrafluorure de titane introduite dans la première zone de réaction définissant un rapport de tétrachlorure de titane à l'oxygène ;

à faire réagir le tétrachlorure de titane avec l'oxygène à une température de réaction d'au moins environ 700°C pour produire du dioxyde de titane ;

à ajuster le rapport du tétrachlorure de titane à l'oxygène dans la première zone de réaction afin de contrôler la dimension des particules et les propriétés du dioxyde de titane ; et

à introduire de l'oxygène secondaire dans le réacteur après que le tétrachlorure de titane ait été introduit dans la première zone de réaction, l'oxygène secondaire étant introduit en une quantité suffisante pour réagir avec le tétrachlorure de titane n'ayant pas réagi.

20. Procédé selon la revendication 19, comprenant en outre l'étape consistant à mélanger le tétrachlorure de titane introduit dans le réacteur avec du chlorure d'aluminium avant l'introduction du tétrachlorure de titane dans le réacteur.

21. Procédé selon la revendication 20, comprenant en outre les étapes consistant :

à produire le chlorure d'aluminium en faisant réagir de l'aluminium avec du chlore dans un générateur de chlorure d'aluminium ; et

à chauffer le tétrachlorure de titane introduit dans la première zone de réaction par la chaleur dégagée par le générateur de chlorure d'aluminium.

22. Procédé selon la revendication 20 ou la revendication 21, dans lequel le chlorure d'aluminium est introduit en une quantité suffisante pour produire entre environ 0,3 et environ 3,0 pour cent en poids d'$Al_2O_3$ dans le produit de dioxyde de titane.

23. Procédé selon l'une quelconque des revendications 19 à 22, comprenant en outre l'étape consistant à introduire une seconde addition de tétrachlorure de titane dans le réacteur près de la seconde zone de réaction.

24. Procédé selon la revendication 23, comprenant en outre l'étape consistant à mélanger la seconde addition de tétrachlorure de titane introduite dans le réacteur avec le chlorure d'aluminium avant l'introduction du tétrachlorure de titane dans le réacteur.

25. Procédé selon l'une quelconque des revendications 19 à 24, dans lequel le tétrachlorure de titane est introduit dans le réacteur à une température d'environ 399°C.

26. Procédé selon l'une quelconque des revendications 19 à 25, comprenant en outre le préchauffage de l'oxygène introduit dans la première zone de réaction à une température comprise entre environ 815°C et environ 982°C.

27. Procédé selon l'une quelconque des revendications 19 à 26, comprenant en outre l'étape consistant à pré-chauffer l'oxygène secondaire introduit dans la seconde zone de réaction à une température comprise entre environ 25°C et environ 1037°C.

28. Procédé selon l'une quelconque des revendications 19 à 26, dans lequel environ 50 à environ 95 pour cent en poids d'oxygène, introduit dans le réacteur, sont introduits dans la première zone de réaction.

29. Procédé selon l'une quelconque des revendications 19 à 28, dans lequel la quantité d'oxygène introduite dans la première zone de réaction et dans la seconde zone de réaction est équivalente à au moins environ 5% en poids supérieure à celle nécessaire pour oxyder complètement la quantité de tétrachlorure de titane introduite dans le réacteur.

30. Procédé selon l'une quelconque des revendications 19 à 29, comprenant en outre le fonctionnement du réacteur à une pression supérieure à la pression atmosphérique d'environ 0,15 MPa à environ 4,0 MPa.

31. Procédé selon l'une quelconque des revendications 19 à 30, comprenant en outre l'étape consistant à ajouter un combustible auxiliaire à l'oxygène qui est introduit dans la première zone de réaction, le combustible auxiliaire étant du monoxyde de carbone, du méthane, du propane, du butane, du pentane, de l'hexane, du benzène, du xylène, du toluène, ou une combinaison de ceux-ci.

32. Procédé selon l'une quelconque des revendications 19 à 30, comprenant en outre l'étape consistant à chauffer l'oxygène qui est introduit dans la première zone de réaction en utilisant un plasma.

FIG-1

FIG. 2

FIG.9

FIG. 4

FIG. 5

FIG. 6

FIG-7

FIG-8